# EUROPEAN PATENT APPLICATION

(11) **EP 4 198 602 A1**
(43) Date of publication of application: **21.06.2023**
(21) Application number: 21216062.6
(22) Date of filing: 20.12.2021
(51) Int. Cl.: G02B 21/00, G02B 21/18, G02B 21/36, G02B 27/14, G02B 21/16

(54) **METHOD AND ARRANGEMENT FOR ANALYSING A MICROSCOPIC SAMPLE CONTAINING A PLURALITY OF FLUOROPHORES, MICROSCOPE AND COMPUTER PROGRAM**

(71) Applicant: Leica Microsystems CMS GmbH, 35578 Wetzlar (DE)
(72) Inventor: PELZER, Dr. Patric, 35578 Wetzlar (DE); SCHLICKER, Dr. Oliver, 35578 Wetzlar (DE)
(74) Representative: DehnsGermany Partnerschaft von Patentanwälten

(57) **Abstract**

The present invention relates to a method (500) of analysing a microscopic sample (10) containing a plurality of fluorophores (301-304) using a wide-field fluorescence microscopy mode and a confocal fluorescence microscopy mode and comprising the steps of (a) performing a first acquisition (514) of fluorescence emissions of at least a subset of the fluorophores (301-304) in a first sample region (623) using the wide-field fluorescence microscopy mode obtaining first image data, (b) performing a selection (516) of a second sample region (624), the second sample region (624) being a partial region of the first sample region (623), and (c) performing a second acquisition (522) of fluorescence emissions of at least a subset of the fluorophores (301-304) in the second sample region (624) using the confocal fluorescence microscopy mode obtaining second image data, wherein said first and second acquisition (514, 522) are performed using a detection in a plurality of detection channels capturing different wavelength regions (310-340). An arrangement (120, 130) for of analysing a microscopic sample (10), a microscope system (100), comprising such an arrangement (120, 130) and a microscope (110) and a computer program is also part of the present invention.

## Description

The present invention relates to a method and to an arrangement for analysing a microscopic sample containing a plurality of fluorophores, to a microscope system and to a computer program.

### Background

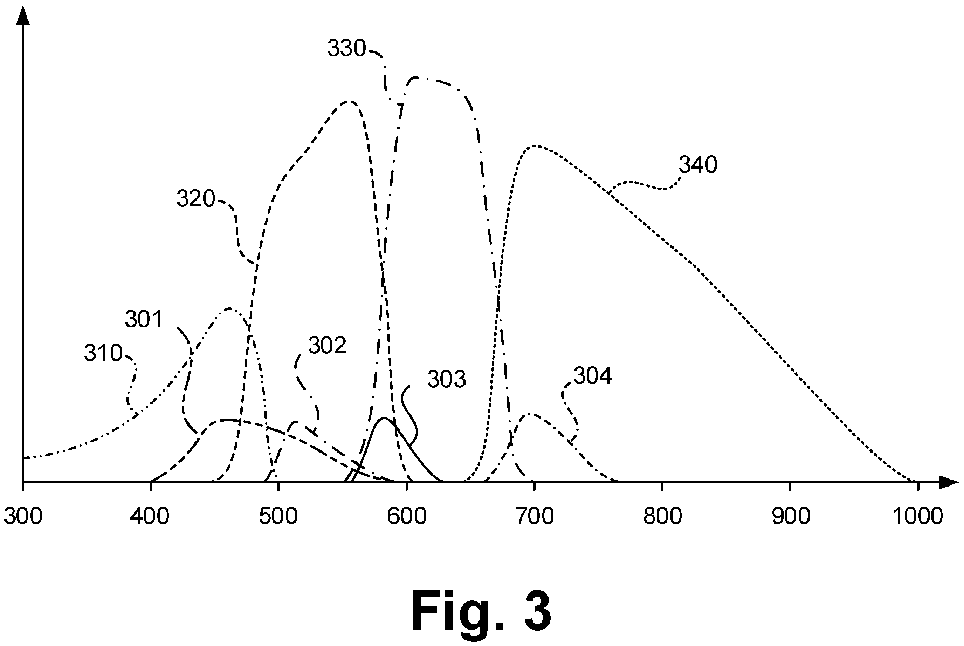

EP 3 721 279 B1 discloses a microscope system comprising a detection unit adapted to detect fluorescence responses of fluorophores in different colour channels using a plurality of detectors. Each of the fluorophores may be excited using light of a light source such as a light emitting diode. In an embodiment discussed in connection with Figure 3, two detection units may be provided and, by means of a switchable or displaceable mirror, light may be guided via corresponding beam paths into either one of these detection units. One of the detections units can be connected to, or be part of, a wide-field detection system, and one of the detection units can be connected to, or be part of, a confocal detection system. Wide-field and confocal illumination units corresponding to the detection units are also provided in an embodiment. More generally, EP 3 721 279 B1 discloses a microscope system adapted to analyse a microscopic sample containing a plurality of fluorophores using a wide-field fluorescence microscopy mode and a confocal fluorescence microscopy mode.

The present invention has the object of improving the process of analysing a microscopic sample in systems like the one just mentioned, but also in other types of fluorescence microscopes and similar devices which are configured to provide a wide-field fluorescence microscopy mode and a confocal fluorescence microscopy mode, particularly in terms of effectiveness, reliability and user friendliness.

### Summary

A method of analysing a microscopic sample containing a plurality of fluorophores using a wide-field fluorescence microscopy mode and a confocal fluorescence microscopy mode is provided. The method comprises the steps of (a) performing a first acquisition of fluorescence emissions of at least a subset of the fluorophores in a first sample region using the wide-field fluorescence microscopy mode obtaining first image data, (b) performing a selection of a second sample region, the second sample region being a partial region of the first sample region, and (c) performing a second acquisition of fluorescence emissions of at least a subset of the fluorophores in the second sample region using the confocal fluorescence microscopy mode obtaining second image data. In the method provided, said first and second acquisition are performed using a detection in a plurality of detection channels capturing different wavelength regions.

Herein, the term "acquisition" or "acquiring" shall refer to any type of signal or data gathering including, but not limited to, using area detectors ("cameras") for wide-field fluorescence detection and photon-counting point or line detectors for confocal detection. Different channels can also be provided using elements in the optical path such as spinning discs, and embodiments of the present invention may be practiced using spinning disc microscopes. For example, two channels may include one detector or camera and a corresponding element in the optical path.

The method provided has the advantage that a sample can initially be examined in the generally faster wide-field fluorescence microscopy mode, and a user is able to specifically examine only such parts or regions of a sample which are found to be relevant at a higher resolution in confocal fluorescence microscopy. The latter parts or regions may be identified in the wide-field fluorescence microscopy mode. This has the advantage that a sample is protected from light damage ("bleaching") and an analysis speed is increased, due to the general faster speed of the wide-field fluorescence microscopy mode. Overall, embodiments of the present invention result in an overall gentler process, as less phototoxic or photobleaching effects are generated. Due to the examination being performed in a plurality of detection channels in each of the examination modes, fluorophore responses in the images obtained are, except for parameters such as different resolutions resulting from the examination modes, advantageously directly comparable. A simultaneous acquisition in different channels, which is envisaged according to embodiments of the present invention, results in a significantly faster examination process.

In an embodiment of the present invention, the plurality of detection channels in the wide-field fluorescence microscopy mode and the confocal fluorescence microscopy mode comprise at least two and/or up to four detection channels. Therefore, an advantageous and simultaneous observation of a corresponding number of fluorophores becomes possible.

The plurality of detection channels in the wide-field fluorescence microscopy mode and the confocal fluorescence microscopy mode may, in an embodiment of the present invention, comprise different detectors, which may be area detectors in the wide-field fluorescence mode and "photon counting" point or line detectors in the confocal fluorescence mode. This allows for each of the detectors being operated at optimum conditions, such as detector gain, and particularly using generally highly sensitive monochrome equipment. However, also different channels using one detector, for example with a spinning disc in the detection channel, may be envisaged according to embodiments of the present invention.

In an embodiment of the present invention, said first acquisition may be preceded by a step of obtaining third image data using a transmitted light microscopy technique in a third sample region equal to or larger than the first sample region. This allows for providing a yet further overview which can be used as a "navigation map" for the sample, such that all further steps are only performed in relevant parts of the sample.

The first acquisition may therefore, in a corresponding embodiment of the present invention, be preceded by a step of identifying one or more sample areas in the third image data, which may be, as partly mentioned, further improve the specificity of the analysis and may reduce subjecting parts of the sample to potentially disadvantageous light impact.

In an embodiment of the present invention, said first acquisition may further be preceded, additionally or alternatively to the steps of obtaining and evaluating the third image data, by a step of providing a sample description dataset indicating one or more sample properties of the sample. Using a sample description dataset, examination settings may advantageously be optimized for the specific type of sample used.

In an embodiment of the present invention, the one or more sample properties include fluorophore properties of at least a subset of the fluorophores. Such an embodiment allows for an essentially fluorophore-based operation of a fluorescence microscope. This is a departure from conventional operating paradigms based on specific instrument settings and particularly enables unexperienced or less experienced users, but also experienced users in situations requiring fast reactions, for example, to adjust and control settings for examining a sample in a more user-friendly and less error-prone manner.

In a corresponding embodiment, wherein fluorophore properties of at least a subset of the fluorophores are provided, the fluorescence emissions acquired in the first and second acquisition may be spectrally un-mixed, using the fluorophore properties, to provide the first and second image data. Such an embodiment allows for detecting "purified" fluorescence responses without influences from other fluorophores.

In embodiments of the present invention, said first acquisition may be performed at a first magnification and said second acquisition may be performed at a second magnification higher than the first magnification. This allows for a detailed analysis of a certain region of the sample at high resolution using the confocal fluorescence microscopy mode without excessively increasing the analysis time for the whole sample.

Said second acquisition, i.e. the acquisition using the confocal fluorescence microscopy mode, may be performed as an acquisition in different sample planes, i.e. in a form of so-called z-stacks to obtain three-dimensional data, in an embodiment of the present invention. Such an embodiment allows restricting the generally time and light intensive examination to such regions of the sample which were identified as particularly relevant.

According to an embodiment of the present invention, the images obtained in said first and second acquisition may be aligned. This has the advantage that features of the sample, such as cell or tissue components, may straightforwardly correlated with each other.

In an embodiment of the present invention, images obtained in said first and second acquisition may be simultaneously displayed in an overlaid or in a side-by-side arrangement. This further simplifies a visual or automatic correlation or summing of image features.

The sample may, in an embodiment of the present invention, be provided in an array of samples, such as in a multi-well plate. The array of samples may comprise a first sub-array and a second sub-array, the first acquisition being performed for the first sub-array and the second sub-array and the second acquisition being performed for the first sub-array and not for the second sub-array. The samples in the first sub-array may particularly be such samples which were identified as being samples of interest for being observed using the confocal microscopy mode.

In embodiments of the present invention, a sample is received in a fluorescence microscope or microscope system and the sample remains in the microscope arrangement during all method steps. All steps are, in other words, performed while the sample remains in the microscope system while both imaging modalities are applied, in such an embodiment of the present invention. In such an embodiment, no change-over of a sample between different microscopes and no transfer of coordinates of regions of interests or structures is necessary.

An arrangement for of analysing a microscopic sample containing a plurality of fluorophores using a wide-field fluorescence microscopy technique and a confocal fluorescence microscopy technique is also provided. The arrangement is configured to (a) perform a first acquisition of fluorescence emissions of at least a subset of the fluorophores in a first sample region using the wide-field fluorescence microscopy technique obtaining first image data, (b) perform a selection of a second sample region, the second sample region being a partial region of the first sample region, and (c) perform a second acquisition of fluorescence emissions of at least a subset of the fluorophores in the second sample region using the confocal fluorescence microscopy technique obtaining second image data. The arrangement is configured to perform said first and second acquisition using a detection in a plurality of detection channels capturing different wavelength regions.

For such an arrangement and its further features and advantages, as well as for features and advantages of different embodiments thereof, reference is made to the explanations in connection with the method and its modifications or further details thereof according to embodiments of the present invention already mentioned above.

The arrangement may, according to an embodiment of the present invention, be configured to perform a method as explained in embodiments above, and therefore, again, specific reference is made to the explanations above.

A microscope system may comprise such an arrangement and a microscope configured for performing said first and second acquisitions, for which reason the explanations above likewise apply and are not repeated for reasons of conciseness.

A computer program with program code for performing a method as explained in different aspects before when the computer program is run on a processor is also provided and likewise takes profits of the corresponding advantages.

### Short description of the Figures

Figure 1 illustrates a microscope system.
Figure 2 illustrates aspects of a microscope.
Figure 3 illustrates aspects of fluorescence detection.
Figure 4 illustrates further aspects of fluorescence detection.
Figure 5 illustrates a method according to an embodiment of the invention.
Figures 6A to 6D illustrates steps of a method according to an embodiment of the invention.
Figure 7 illustrates a sample array examined according to an embodiment of the invention.
Figure 8 illustrates a beam splitting according to an embodiment of the invention

### Detailed description

In conventional fluorescence microscopy, filters are used to selectively capture a part of the fluorescence emission spectrum of a given fluorophore to increase specificity. However, if fluorescence responses of several fluorophores are to be captured in this situation, this classically requires switching the filter, which is generally slow and therefore disadvantageous, e.g. if a moving sample is observed.

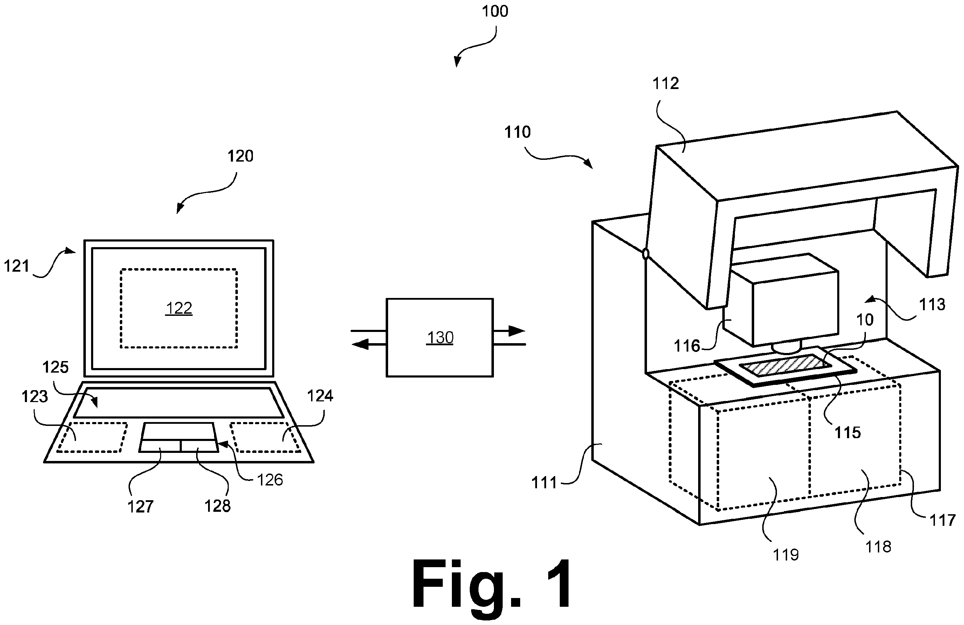

More recently, also microscopes with different detection channels for different wavelength ranges became known. For example, EP 3 721 279 B1 discloses a microscope system comprising a detection unit adapted to detect fluorescence responses of fluorophores in different colour channels using a plurality of detectors. In such systems, which are also discussed below with reference to Figures 1, 2 and 8, switching filters is no longer required to detect different colour channels separately. The present invention is not limited in terms of which means are used to provide different colour or detection channels and may also be used in connection with spinning disc microscopes, as mentioned. However, embodiments of the present invention may include using a corresponding microscope system which is, as already mentioned at the outset, configured to be operated in a wide-field fluorescence microscopy mode and in a confocal fluorescence microscopy mode.

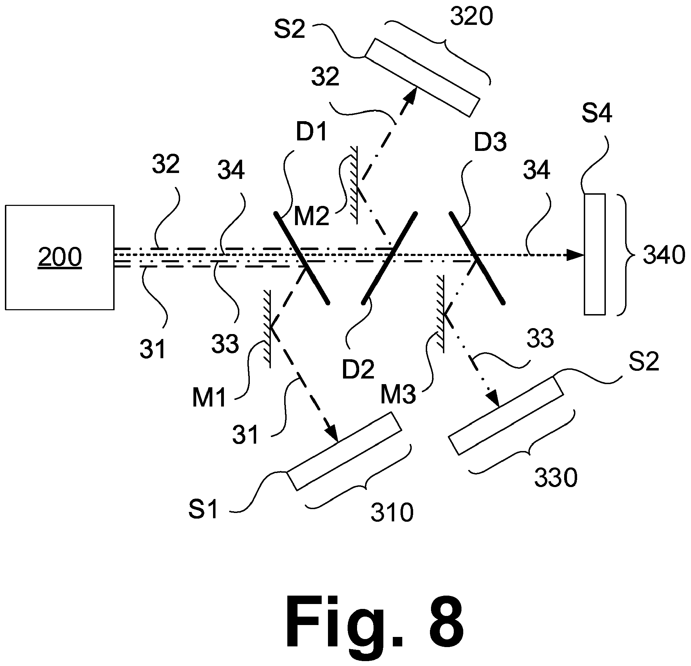

In an embodiment of the present invention, to separate different wavelength regions and to detect these regions in different detection channels, a microscope or microscope system may comprise a detection unit with a colour beam splitter assembly including three beam splitter prisms. Each of the beam splitter prisms may comprise a first, a second and a third prism surface. A dichroic layer may be provided on or parallel to each of the second prism surfaces of the beam splitter prisms. The first prism surfaces of the beam splitter prisms may point or face into the same direction and may be oriented parallel to each other at a right angle to an optical axis through the first and second prism surfaces of the beam splitter prisms. The first and second prism surfaces of each beam splitter prism may be oriented at an acute first angle to each other, the second and third prism surfaces of each beam splitter prism may be oriented at a right or obtuse angle to each other, and the third and first prism surfaces of each beam splitter prism may be oriented at an acute third angle to each other. To each beam splitter prism there may be assigned a prismatic equalisation element having a first and a second prism surface. The second prism surface of each equalisation element may be arranged in a common plane with or parallel to the second prism surface of the associated beam splitter prism. Light reflected at, or passing through, the dichroic layers, may each be made to be incident onto a detector or camera chip, thus forming the detection channels according to an embodiment of the present invention. A further general explanation of beam splitting to form detection channels is given in connection with Figure 8 below.

Any arrangement can be used to provide the different detection channels. While such an arrangement typically may comprise dichroic layers, these layers do not necessarily have to be provided on, or parallel to, a prism surface, but these layers can, in an essentially similar way, also be associated to filter or mirror surfaces arranged in a suitable manner. Essentially the same, or different, beam splitter arrangements can be used for light detected in a wide-field fluorescence microscopy technique and in a confocal fluorescence microscopy technique, in an embodiment of the present invention.

Fluorescence microscopes which provide for a detection of different colour channels using different detectors may also be provided as systems which allow a user to select between different microscopy operation modes including, but not limited to, a wide-field, a confocal and a light-sheet operation mode. Such fluorescence microscopes may be used in embodiments of the present invention.

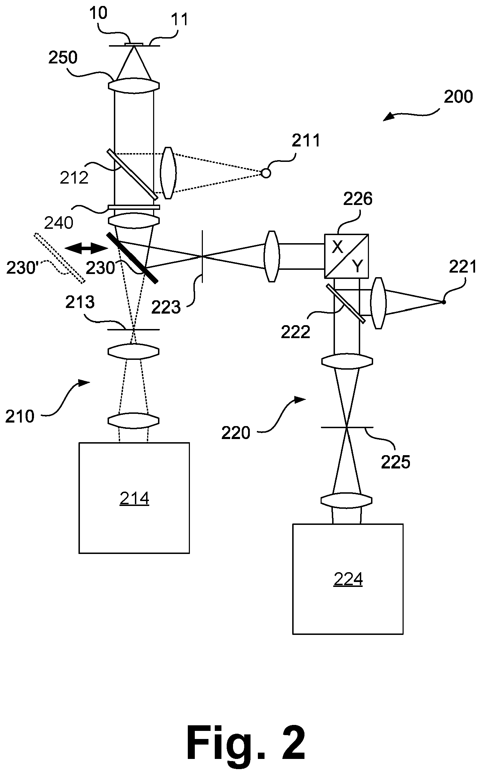

Figure 1 illustrates a microscope system 100 including such a microscope 110 in a more general way and Figure 2 illustrates details of switching between a wide-field and a confocal operation and the respective illumination and detection units in such a microscope 110 or 200. Embodiments of the present invention may be used in essentially all microscopes and microscope systems operable in the different modes mentioned, where proportions of mixed fluorescence responses of different fluorophores are detected in different detection channels and are amenable to being treated by spectral un-mixing techniques to obtain "pure" fluorophore responses.

Irrespective of whether filters or different detection channels are used, so-called cross-excitation and cross-emission may be observed in methods of fluorescence microscopy. Cross-excitation is the phenomenon that a fluorophore with a certain excitation wavelength may to some extent also emit fluorescence when irradiated with excitation light of a different wavelength intended to excite a second fluorophore. Cross-emission is the effect of a fluorescence response typically not being a sharp peak at a certain wavelength but a spectrum, which may be detected to some extent in an adjacent detection channel. That is, using filters or different detection channels alone, a clear separation between fluorophores may not be possible. This is particularly the case when different fluorophores with relatively small differences in their respective excitation and/or emission wavelengths are used.

In order to tackle the problems of overlapping fluorophore emissions, the un-mixing approaches already mentioned above have been developed. These generally improve the image analysis after simultaneous imaging of multiple fluorophores. An overview is given e.g. by T. Zimmermann in an article entitled "Spectral Imaging and Linear Unmixing in Light Microscopy", Adv. Biochem. Eng. Biotechnol. (2005) 95: 245-265. In these un-mixing approaches, the spectral distribution of the "pure" fluorescence emission of a single fluorophore, such as detected by detectors (so-called "endmember spectra", or "reference emission spectra") is used to recover the spatial fluorophore abundances from multiple detector images or contributions of different fluorescence emissions. These reference emission spectra can be measured using control samples or calculated from literature values of fluorophore emission spectra and device sensitivity, all possibilities being encompassed by embodiments of the present invention.

In such un-mixing methods, the quality of the un-mixing results will depend on how well the endmember spectra match the actual spectra of the fluorophores in the sample. The emission spectra of fluorophores are known to be variable, in particular depending on chemical environment, target proteins, illumination spectrum, or illumination history (i.e. particularly "bleaching" or photo-conversion effects). This variability can lead to sub-optimal un-mixing results, e.g. residual crosstalk between fluorophore channels and embodiments of the present invention may take this into account.

Before specifically turning to features of embodiments of the present invention, microscope systems which may be used in such embodiments will be described. As mentioned, Figure 1 illustrates such a microscope system 100. The microscope system 100 may be configured to perform a method described herein. The microscope system 100 comprises a microscope 110 and a computer or computer system 120. The microscope 110 is configured to take images and is connected to the computer system 120 by means of a wired or wireless communication path or interface unit 130. The microscope 110 may be configured to be operated in different microscopy operation modes, e.g. a wide-field and a confocal operation mode as further illustrated with reference to Figure 2. Even if Figure 1 illustrates a special type of microscope 110, embodiments of the present invention may be used with any types of microscopes, such as upright or inverted microscope, details of which are shown in Figure 2, or any other geometrical arrangement.

The computer system 120 may be configured to execute at least a part of a method described herein. The computer system 120 and the microscope 110, as well as the interface unit 130, which is entirely optional, may be separate entities but can also be integrated together in one common housing. The computer system 120, even if illustrated as a laptop computer, may be part of a central processing system of the microscope 110 and/or the computer system 120 may be part of a subcomponent of the microscope 110, such as a sensor, an actor, a camera or an illumination unit, etc. of the microscope 110. Essentially the same holds true for interface unit 130.

The computer system 120 may be a local computer device (e.g. personal computer, laptop, tablet computer or mobile phone) with one or more processors 123 and one or more storage devices 124 or may be a distributed computer system (e.g. a cloud computing system with one or more processors and one or more storage devices distributed at various locations, for example at a local client and/or one or more remote server farms and/or data centers). The computer system 120 may comprise any circuit or combination of circuits. An embodiment may e.g. also include that a computer device such as the computer system 120 or a part thereof may be included in the microscope 110 and may be controlled with a second computer system 120 or a part thereof.

In embodiments of the present invention, the computer system 120 may include the one or more processors 123 as being integrated into a housing of the computer system 110 in Figure 1 without limitation. The processor(s) 123 can be of any type and can be provided in any number and at any position and in any component of the microscope system 100. As used herein, the term processor(s) may refer to any type of computational circuit, such as, but not limited to, a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), a multiple core processor, a field programmable gate array device (FPGA), for example, of microscope 110 or any component (e.g. of a camera) of the microscope system 100 or any other type of processor or processing circuit. Other types of circuits that may be included in the computer system 120 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems.

The one or more storage devices 124 which the computer system 120 may include can comprise one or more memory elements suitable to the particular application, such as a main memory in the form of random access memory (RAM), one or more hard drives, and/or one or more drives that handle removable media such as compact disks (CD), flash memory cards, digital video disk (DVD), and the like.

The computer system 120 may also include a display device 121, one or more loudspeakers, a keyboard 125 and/or one or more user interaction devices, which can be or include a mouse or, as illustrated, a trackpad 126 with buttons 127 and 128, a trackball, a touch screen, a voice-recognition device, or any other device that permits a system user to input information into and receive information from, the computer system 120. As illustrated, the computer system 120 may be configured to render, on display device 121, a graphical user interface 122. The computer system 120 may further be configured to provide, via the keyboard 125 and/or the trackpad 126 and/or any further input device, an interaction possibility with the graphical user interface 122 to operate the microscope system 100.

The microscope 110 is shown to comprise, among other things, a microscope housing 111 with a lid 112 covering a sample space 113. The sample space 113 may be configured to provide a controlled atmosphere and/or temperature. A sample 10 may be positioned in a sample holder 115 beneath an illumination unit 116. A wide-field detection unit 118 and a confocal detection unit 119 may be provided in the housing 111 in a detection part 117. These may, for example, share a common lens unit (not specifically illustrated).

In other embodiments, the microscope 110 may be configured as a conventional microscope which may e.g. comprise a focus adjustment knob, a stage, a lens revolver, a binocular tube with eyepieces, and camera or detector ports. Embodiments of the present invention are not limited by the specific configuration shown in Figures 1 and 2.

The computer system 120 and the interface unit 130 may be referred to as a microscope control arrangement, but this term, as used herein, is not limited by it comprising a computer 120 and an interface unit 130. The term "microscope control arrangement", as used herein, is particularly to be understood functionally and to refer to a unit or group of units comprising one or more processors 121 and one or more storage devices 122 provided in a computer system 120 or in or distributed among any other unit(s).

Figure 2, which will now also be described before turning to the description of embodiments of the invention, illustrates parts of a fluorescence microscope 200 which may be used in an embodiment of the present invention and which can e.g. be used as the microscope 110 in a microscope system 100 as illustrated in Figure 1. Fluorescence microscope 200 as illustrated in Figure 2 comprises two detection units, i.e. a wide-field detection unit 210 (also referred to as "first" detection unit) and a confocal detection unit 220 ("second" detection unit. These detection units 210, 220 may correspond to the wide-field and confocal detection units 188 and 189 as explained in connection with Figure 1. As mentioned, but not specifically illustrated here, embodiments of the present invention may also be realized using a spinning disc microscope.

By means of a switchable or displaceable mirror 230 (as illustrated by a bidirectional arrow), or any other switching means, observation light may selectively be coupled in either the first detection unit 210 or the second detection unit 220. In the position illustrated in Figure 2, observation light is coupled via mirror 230 into the second detection unit 220 to the right (in the embodiment illustrated). If mirror 230 is moved out of the position indicated, as illustrated with 230', the light path further proceeds to the bottom (in the embodiment illustrated) and thus observation light, as illustrated with dotted rim rays, is coupled into the first detection unit 210. Optical lenses in an illumination and detection beam path are not specifically indicated. A blocking or excitation/emission filter, which may be provided in any way conceivable, is indicated 240.

The first detection unit 210 is, in the example shown in Figure 2, and as mentioned before, a wide-field detection unit in which an image plane is indicated 213. By using lenses not specifically indicated, the observation light is collimated and irradiated into a detector arrangement 214 in the first detection unit 210. Detector arrangement 214 may be configured to split the observation light into different detection channels.

As to a detector arrangement 214 which is usable in the first detection unit 210, specific reference is made to EP 3 721 279 B1, which hereby is incorporated by reference, particularly to detection unit 10 as illustrated in Figure 3 therein and the corresponding explanations, and the disclosure is incorporated by reference. An illumination unit for wide-field detection in the first detection unit 210 is illustrated in a simplified way and indicated 211. Its light may be coupled into an illumination beam path of the fluorescence microscope 200 in a way known in microscopic illumination, such as using a dichroic mirror 212.

The second detection unit 220 is, in the example shown in Figure 2, and as mentioned before, a confocal detection unit in which an image plane is indicated 223. A point light source 221 may be provided for confocal detection using confocal detection unit 220. Point light source 221 may particularly be a (single) pinhole opening into which laser light may be focussed, or an end of a light guide or fibre optics from which light emanates in a point-like manner. Point light source 221 is conjugated with an intermediate image plane and an object plane 11 in the sample 10, such that illumination light may, via a dichroic mirror 222 or any other spectral beam splitting arrangement, such as an acousto-optical beam splitter, and illumination optics not specifically indicated, be focussed to a point of the object plane 11 in a scanned manner using a X/Y scanner 226 which may be arranged in a tele-centric plane or a plane conjugated therewith. This allows for scanning the sample 10 in the sample plane 11, as generally known. A pinhole is indicated 225.

Again, for further details, specific reference is made to EP 3 721 279 B1, particularly to detection unit 20 as illustrated in Figure 3 therein and the corresponding explanations, and the disclosure is incorporated by reference. The same applies for a detector arrangement 224 which may be configured to split the observation light into different detection channels. Also as to a detector arrangement 224 usable in the second detection unit 220, reference is made to EP 3 721 279 B1, and the disclosure is incorporated by reference. Further reference is made to the explanations in connection with Figure 8 below.

Spectral un-mixing techniques may be used in connection with fluorescence microscopy using fluorescence microscopes 100 as illustrated in Figures 1 and 2. Spectral un-mixing is a technique which, for example, tackles the problems of overlapping emission spectra of fluorophores as a result of cross-excitation or cross-emission between different detection channels. These phenomena, when not addressed properly, may lead to false-positive results. Corresponding problems become particularly pronounced when samples are labelled with three or more fluorophores, even if detection is performed in different channels.

Spectral un-mixing may particularly include linear un-mixing, non-negative matrix factorization, deconvolution, phasor unmixing, hybrid unmixing, principal component analysis and combinations thereof. Un-mixing techniques may be based on a priori knowledge of emission spectra or may be used in connection with restricting the plurality of fluorophores to be the same or lower as the plurality of detection channels. At its core, and in the understanding herein, spectral un-mixing is a technique of decomposing mixed multichannel images into spectral signatures and abundances of each signature in each pixel.

Figure 3 illustrates the problems underlying spectral un-mixing used in embodiments of the present invention in which a detection in different detection channels is performed using a colour beam splitter. In Figure 3, the plurality of detection channels is illustrated to be four, but essentially the same problems are observed when any other plurality of detection channels is used. Embodiments of the present invention may be used with any plurality of detection channels. Figure 3 shows a quantum efficiency diagram in which a quantum efficiency is plotted on the ordinate versus a wavelength in nanometres on the abscissa. 310, 320, 330 and 340 illustrate different detection channels by way of the light captured therein as a result of light being split into these detection channels, e.g. by a colour beam splitter arrangement performing a colour "split" approximately at the wavelengths where the graphs shown for adjacent ones of the channels 310, 320, 330 and 340 intersect. 310 denotes a detection channel capturing light in the blue region, 320 denotes a detection channel capturing light in the green region, 330 denotes a detection channel capturing light in the orange region and 340 denotes a detection channel capturing light in the red region.

The spectra of various fluorescent dyes or fluorophores are designated in Figure 3 by 301, 302, 303 and 304. As illustrated, while a fluorescence response of fluorophore 301 (common name DAPI) has a maximum in channel 310, a considerable proportion may be detected in channel 320, where the maximum for fluorophore 302 (GFP) is detected. This means that when a sample is stained with these fluorophores, they cannot be separated completely by using different detection channels, but in channel 320 emission spectra overlap. In other words, fluorophore 301 is, to a considerable part, cross-detected in channel 320 and an unmixing is necessary. The fluorophore 303 (dsRed), for example, will be detected in approximately equal parts in channels 320 and 330 and therefore in these channels parts of its fluorescence response will be detected. Similar considerations apply for channels 330 and 340 and fluorophore 304 (Cy5).

Generally, to enable spectral un-mixing, reference emission spectra may be externally provided or these can be directly measured in reference samples containing one and only one of the fluorophores of the sample of interest.

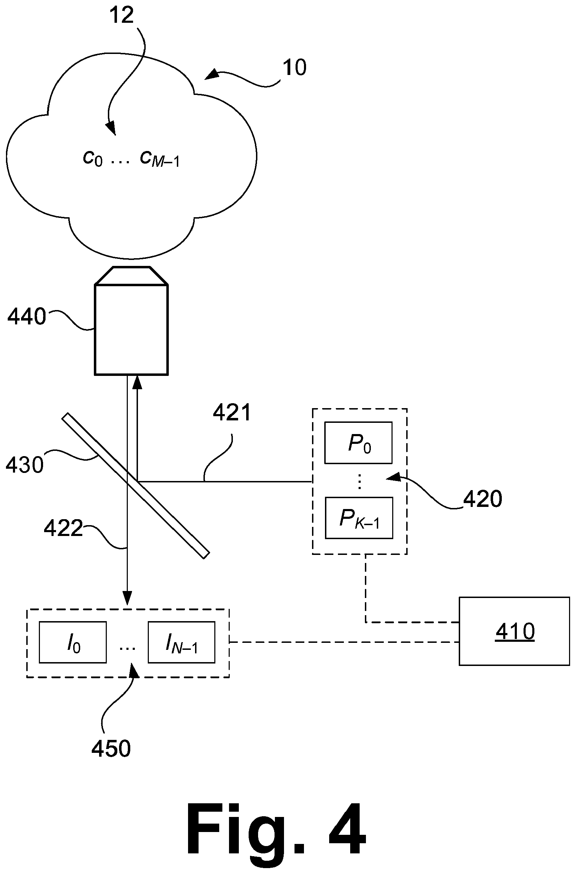

Other approaches are known, for example, from European patent application EP21212550.4 which is incorporated herein by reference. Specific reference is made to Figure 4 of this European patent application. Such an approach may include a procedure for determining and validating reference emission spectra including the steps of (a) providing a plurality of image acquisition settings for a sequence of images of the sample equal to, or greater than, the plurality of fluorophores and including an illumination setting for each of the sequence of images, (b) acquiring the sequence of images of the sample using the plurality of image acquisition settings and storing each of the sequence of images of the sample together with the corresponding illumination setting, (c) determining candidate reference emission spectra for the fluorophores to be reconstructed from the sequence of images of the sample (200) using one or more reference emission spectra determination algorithms, and (d) conditionally using said candidate reference emission spectra as the reference emission spectra in said spectral un-mixing. Optionally, a plausibility check for the candidate reference emission spectra between steps (c) and (d) may be performed, a result of the plausibility check indicating whether or not the candidate reference emission spectra are plausible for the fluorophores to be reconstructed, and said candidate reference emission spectra may be used as the reference emission spectra in said spectral un-mixing according to step (d) if a result of the plausibility check is positive or rejecting said candidate reference emission spectra if the plausibility check is negative.

Embodiments of the present invention may particularly be used in a fluorescence microscope with multiple illumination sources and multiple detectors with known spectral characteristics, as already described in embodiments in connection with Figures 1 and 2 and further explained in connection with Figure 8 hereinbelow. These and further aspects are also shown in connection with Figure 4 where a fluorescence microscope is indicated 400 and a sample is indicated 100.

In Figure 4, fluorophores of a number m = 0, ..., *M-* 1 in sample 10 are referred to with 12, wherein c indicates their respective abundances. Illumination sources of a number k = 0, ..., *K -* 1 are referred to with 420, wherein P indicates their respective illumination power. Detection channels of a number n = 0, ..., *N -* 1 are referred to with 450 here, wherein I indicates the detection intensity. A detection path is referred to with 422, an illumination path with 421, a dichroic mirror with 430, a control unit with 410 and a lens with 440.

As illustrated, light of illumination sources 420 is reflected at dichroic mirror 430 and irradiated onto sample 10 through lens 440, causing a fluorescence response of fluorophores 12. Fluorescence emissions are captured using the lens 440 and pass the dichroic mirror 430. They are split into detection channels 450 in different wavelength regions using a colour beam splitter of any type and configuration conceivable, for example as explained in EP 3 721 279 B1 in Figure 1 and referred to with 100 there, or as explained in more detail before and below in connection with Figure 8. Corresponding colour beam splitters may be provided for area and point or line detectors, such that these can be provided as monochrome detectors. Beam splitters may be provided for each of the fluorescence detection modes, i.e. wide-field and the confocal fluorescence detection.

As evident from the sheer plurality of components present in a microscope operable in different microscopy operation modes, such as the microscope 200 as illustrated in Figure 2, but also in more conventional fluorescence microscopes operable in only one of these fluorescence operation modes, a very large plurality of settings has to be performed conventionally, including, but not limited to, a selection or intensity of light sources and possibly corresponding filters in either of the operation modes. Furthermore, such settings include, but are not limited to, detector settings such as, in a wide-field operation mode, an exposure time, a sensor gain, an area sensor crop, an area sensor binning or the selection of a specific area sensor, and, in a confocal operation mode, a scan speed, a scan resolution, a pinhole size, a detector gain and the selection of a specific detector used. While the setting or adjustment of operation parameters of some of these components can be simplified e.g. by selecting suitable default values, using optimization algorithms, coupling suitable adjustments, etc., the adjustment of at least some of the components used in either one of the operation modes is conceptually strictly separated in conventional arrangements.

Therefore, a user still generally has to have detailed knowledge of the technical background of each of the operation modes and what their effect to the result achieved is. As mentioned, a user is required a user to "switch" conceptually and mentally between generally different operation and interaction concepts in conventional arrangements when these provide for different fluorescence microscopy modes like a wide-field and a confocal mode. This problem is overcome according to embodiments of the present invention, in which, as will now be further explained, a fluorophore-based workflow is provided and a user is essentially enabled to observe spectrally un-mixed fluorescence channels

In embodiments of the present invention, particularly a spectral un-mixing which is provided in the context of the fluorophore-based workflow as proposed herein, is performed "in time" or "live", i.e. during an acquisition of fluorescence responses in different detection channels, which enables a user to interactively operate a fluorescence microscope system such as the fluorescence microscope system 100 as shown in Figure 1. Other than in conventional fluorescence microscope systems 100 in which a spectral un-mixing may be performed after an acquisition sequence is completed, embodiments of the present invention allow for an immediate reaction to events or an adaption of settings in real time. Embodiments of the present invention may particularly be used in connection with moving (living) samples which require fast operations such as refocussing or moving an observation field.

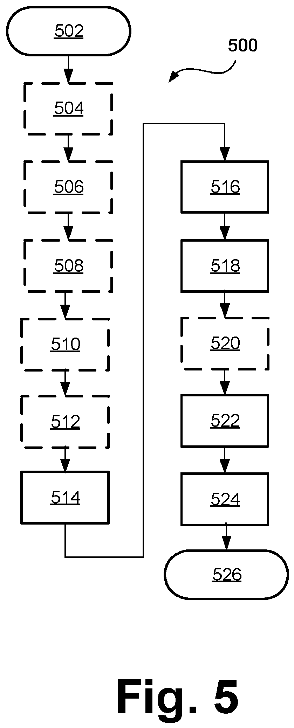

A method according to an embodiment of the present invention is illustrated in Figure 5 in the form of a schematic flow diagram and indicated 500.

The method 500 starts with an optional step 502 which may, for example, include switching on a fluorescence microscope system such as the fluorescence microscope system 100 shown in Figure 1 and booting the computer system 120.

After at least a part of the components of the fluorescence microscope system 100 have been powered up, a temperature in sample space 113 has been reached a set value, or any other condition for a start of an analysis has been met, a user may, in an optional step 504, provide access to a sample space such as the sample space 113 shown in Figure 1, e.g. by unlocking and/or opening a lid such as the lid 112 as shown in Figure 1 using any operation means available, e.g. including operation of a capacitive switch.

In an optional step 506, the user may position a sample such as the sample 10 shown in Figure 1 in a sample holder, such as the sample holder 115. In step 506, the sample may also be coarsely positioned in the sample space 113.

After step 506 has completed, the user may, in an optional step 508, restrict access to sample space 113, e.g. by closing and/or locking lid 112. A certain waiting time may be present subsequent to step 508, such as allow for temperatures to equilibrate.

In an optional step 510, an overview image of the sample 10 may be acquired, e.g. using transmitted light microscopy, and procedures such an object-finding procedure or an autofocus procedure may be performed, particularly in order to be able to manually identify or to automatically identify a region of interest in the sample 10 and/or in order to bring the sample 10 in focus. A focussing or sample-finding step, however, may also be performed without an overview image. In step 510, an overview image may particularly be acquired by stitching smaller-sized images, which may or may not be taken with a certain overlap, or which may also have been taken with different focus settings. Such a stitching may also be performed in subsequent method steps such as wide-field or confocal image acquisition.

In an optional step 512, according to an embodiment of the present invention, sample properties may be defined, e.g. by a user in a graphical user interface. The sample properties may e.g. include a way the sample is provided (on a slide, on a petri dish, in wells of a multi-well plate, using a microfluidic device, in a sample cartridge, etc.), optical properties of a sample carrier (including transmissibility), the aggregate state of the sample (liquid, solid, gel-like, frozen, glassy, etc.), a method of preparation of the sample (thin section, ultra-thin section, smear, etc.), a biotic origin (plant, animal, human, bacteria, etc.) and contents and nature of the sample (adherent cells, floating cells, tissues, cell aggregates, cell shapes, etc.) each of which may influence the detection modalities preferably or advantageously used for microscopically analysing the sample in a wide-field and/or a fluorescence microscopy analysis technique. Further sample properties may, for example, include an acidity of the sample medium, which may influence or shift fluorescence spectra of fluorophores to some extent. As mentioned, emission spectra of fluorophores are known to be variable, in particular depending on chemical environment, target proteins, illumination spectrum, or illumination history, and embodiments of the present invention may take this into account using the sample properties.

On this basis, an adjustment of different components of the microscopic observation apparatus used may be performed, some of which will now be mentioned without any intention of being exhaustive and/or limiting.

Adjustments may e.g. include the selection of a lens distance which may be performed on the basis of the thickness of a sample carrier. A thickness of a sample carrier may also dictate the maximum magnification as a consequence of the lens distance correlating with the magnification. A setting of a detection speed or an imaging frequency may be performed on the basis of whether the sample is liquid or solid or whether it is a living or non-living sample, particularly in order to be able to cope with moving sample components. Such an adjustment may also include a setting based on a trade-off between detection resolution and detection speed. In wide-field analysis, detection speed is essentially governed by the detection frequency of an area detector a period of which also governs the exposure time. In wide-field analysis, detection speed is essentially governed by the speed a sample is scanned. This speed may be increased by enlarging the illumination and detection spots by adjusting the size of a pinhole, in a trade-off with resolution.

Embodiments of the present invention may particularly comprise adjusting the detection speed using a common input method, such as by using a common element of a graphical user interface. A common element may be used for both detection techniques, such as explained, for example, in International patent application PCT/EP2021/084394 by the present applicant, the contents of which are incorporated herein by reference. A light intensity may be adjusted, for example, on the basis of a known and/or assumed sensitivity of the sample to light, which may in turn be a result of an opacity of the sample as influenced by the volume, material, growth medium and matrix, and the biological origin. Corresponding adjustments may be corrected and/or further adjusted by a user of the microscope system.

In a step 512, also a fluorophore description dataset may be provided, indicating properties of at least a subset of the fluorophores with which the sample, such as the sample 10 shown before, is stained. A fluorophore description dataset may particularly include the trade names or chemical names of the fluorophores and fluorescence spectra under standard conditions or any non-standard conditions, such as provided as the sample properties in step 512 as well. Fluorescence spectra may be measured or they may be theoretical spectra. They may be provided in any data form conceivable, such as, but not limited, as two- or three-dimensional diagrams, mathematical functions, look-up tables, spread-sheet tables, databases, or combinations of such data.

Step 512 may particularly include defining fluorescence description datasets, or entries thereof, "from scratch", i.e. by enabling a user to provide or input such fluorescence description datasets, or defining fluorescence description datasets from an assembly of fluorescence datasets, such as a plurality of reference spectra stored in a database of reference spectra. Step 512 may particularly serve to define reference or "end-member" spectra for a spectral un-mixing process used in subsequent method steps. The term "reference spectra" or "end-member spectra" is understood herein in the sense used generally in the field of spectral un-mixing. Spectra may generally be provided in an unmodified or modified form, wherein a modification may e.g. be based on known, estimated, determined or theoretical influences of environment parameters to the spectra, particularly on the basis of the sample properties mentioned before.

As indicated in Figure 5, the method 500 may, in an embodiment of the present invention, include performing a first acquisition 514 of fluorescence emissions of at least a subset of the fluorophores, such as the fluorophores 301 to 304 shown in Figure 3, in a first sample region using the wide-field fluorescence microscopy mode obtaining first image data. The first sample region may already be a sub-region of an overall field of view of the sample and it may particularly a sub-region of an overview image as obtained in a step 510 as explained above. This is, however, not mandatory, and embodiments of the present invention may also include an acquisition of the whole sample region in step 514. Using the wide-field fluorescence microscopy mode to obtain the first image data has, as mentioned, the particular advantage that the time required for wide-field fluorescence microscopy is generally less than for a higher-resolution confocal fluorescence microscopy mode, and embodiments of the present invention, therefore, may accelerate a detection and protect the sample from excessive light impact ("bleaching").

As further shown in Figure 5, the method may, in an embodiment of the present invention, further proceed to a step 516 corresponding to the selection of a second sample region, wherein the second sample region is being a partial region of the first sample region previously selected in step 514. Such a second sample region may particularly a sample region of interest identified in step 514 as requiring further analysis at a higher resolution. Identification of the second sample region may be performed visually by or user, including a guidance by an automated detection or fully automatically.

In a step 518, the method 500 may, according to an embodiment of the present invention, include switching from the wide-field fluorescence microscopy mode to the confocal fluorescence microscopy mode. This switching may, as explained before, using a single user operation which may be translated to a plurality of component settings, such as explained, for example, in International patent application PCT/EP2021/084394 by the present applicant. Further details and advantages were mentioned above.

In an optional step 520, a microscope lens or objective switching may be performed in the method 500. In this way, particularly a higher magnification may be selected to be used in the confocal fluorescence microscopy mode. This switching step 520 may be performed before or after step 518 or may be triggered on the basis of the particularly single user operation referred to in connection with step 518.

According to an embodiment of the present invention, method 500 then includes a second acquisition of fluorescence emissions of at least a subset of the fluorophores in the second sample region using the confocal fluorescence microscopy mode obtaining second image data may be performed in a step illustrated 522 in Figure 5. This step has repeatedly been explained before. To briefly repeat what was said above, the confocal fluorescence microscopy mode performed in step 522 according to the present invention limits this time and light intensive method step to specific regions of the sample, resulting in a shorter analysis speed and potentially less sample damage.

In embodiments of the present invention, said first and second acquisition 514, 522 are performed using a detection in a plurality of detection channels capturing different wavelength regions. As mentioned before, this allows for a particularly advantageous visual comparison or correlation in the different observation modes. The acquisition may be performed, in an embodiment of the present invention, using a detection in a plurality of detection channels capturing different wavelength regions, such as the wavelength regions 310 to 340 as shown in Figure 3. Further details as to a detection in different detection channels were already extensively explained before. As explained, due to the spectral nature of fluorescence responses, the fluorescence responses cannot "purely" be separated using the detection in different channels alone.

In the acquisition steps 514, 522, a spectral un-mixing of the fluorescence emissions, particularly using a fluorophore description dataset, may be performed, in order to provide spectrally un-mixed fluorescence signal data. As to spectral un-mixing methods, all of which may be used in embodiments of the present invention, reference is made to the explanations above. Particularly, spectral un-mixing may be performed on the basis of the reference or end-member spectra provided in step 510 mentioned above.

According to an embodiment of the present invention, the method 500 may include one or more optional further steps 524, which may comprise further sample treatment steps, observation steps or image processing steps. Step(s) 524 may also include, for example, a step of correlating certain features in the sample, which may be detected on the basis of the spectrally un-mixed fluorescence data, in a manual or automated way, to track certain features in the sample, or to correlate detected features with a condition, a state or a nature of the sample, such as a cell or tissue or a part thereof, or a clinical condition related to a feature detected in method 500. This may particularly be performed on the basis of a detection in the wide-field and in the confocal microscopy operation mode. Any further processing steps which are known from the field of microscopic sample examination or processing of microscopic images may be included.

The method 500 may end with a step 526 which may include, for example, preparing a microscope for a further examination step, removing the sample from the microscope, and powering down microscope components.

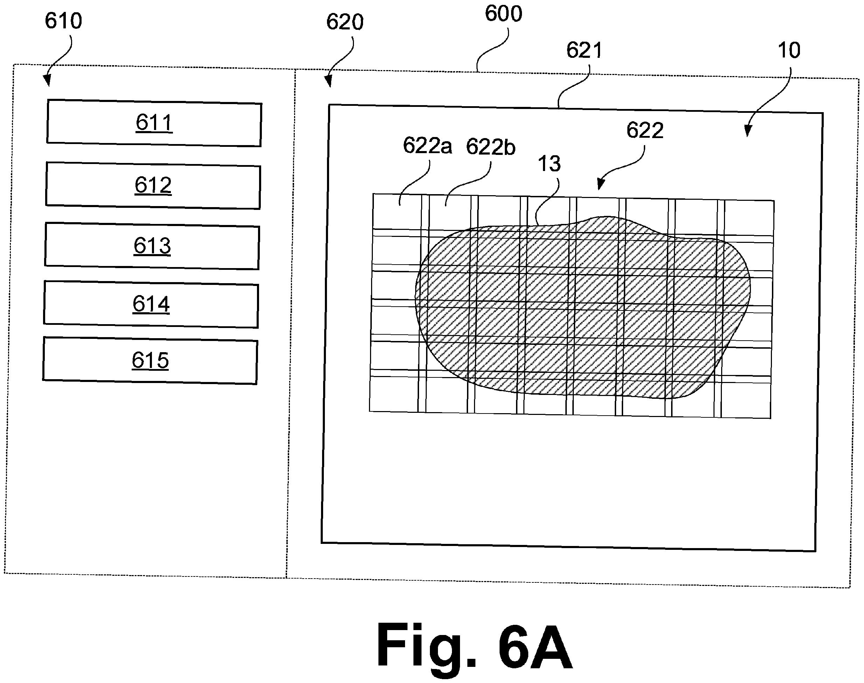

In Figures 6A to 6D, aspects of embodiments of the present invention are illustrated with reference to graphical user interface view 600 which may be part of a graphical user interface such as the graphical user interface 122 as schematically illustrated in Figure 1. In Figures 6A to 6D, these graphical user interface views are shown in different steps which already have been discussed in part in connection with Figure 5.

In a first panel 610, user interface widgets 611 to 615, such as buttons, entry fields, labels etc. are rendered, allowing a user to make any type of selections or perform any type of settings as described before, particularly in connection with Figure 5. Generally, in the understanding used herein, the term "widget" shall refer to any element of interaction rendered as a part of a user interface including, but not limited to, elements configured for selection and for the display of elements or collections such as buttons (including radio buttons, check boxes, toggle switches, toggle buttons, split buttons, cycle buttons), sliders, list boxes, spinners, drop-down lists, menus (including context menus and pie menus), menu bars, tool bars (including ribbons), combo boxes, icons, tree views, grid views, elements configured for navigation such as links, tabs and scrollbars, elements for textual input such as text and combo boxes, elements for output of information such as labels, tool tips, help balloons, status bars, progress bars and information bars, and containers such as (modal) windows, windows, dialog boxes, palettes, frames and canvas elements.

Particularly, user interface widgets 611 to 615 may be configured to trigger steps involved in methods according to embodiments of the present invention or to provide datasets, including, but not limited to, a dataset describing sample features and fluorophore datasets as extensively explained in connection with step 512 shown in Figure 5 above. For example, such interface widgets 611 to 615 may be configured to open a database or list of fluorophores or providing input fields allowing a user to enter fluorescence data, reference spectra or fluorophore names. User interface widgets 611 to 615 may also be configured to allow a user to select a number of detection channels used, a number of images displayed in parallel or in an overlaid manner, colours in which fluorescence channels are rendered, and any parameters of displaying image data. As to specific details on which widgets 611 to 615 may be provided, reference is made yet again to International patent application PCT/EP2021/084394. User interface widgets 611 to 615 may particularly be configured to adjust settings of a wide-field fluorescence detection mode and a confocal fluorescence detection mode and to switch therebetween.

In a second panel 620 of the graphical user interface view 600, one or more views of a sample, which is again referred to with 10, may be provided, particularly in a userconfigurable way. Only for reasons of conciseness, a single view 621 is illustrated in Figures 6A to 6D but the number is generally not limited in embodiments of the present invention. Such a single view 621 may also be provided in an initial phase of an experiment in order to identify a region of interest, and several views may later be provided, e.g. to visually correlate features of a sample 10 detected in different detection channels. In other words, the number of views may be configurable and variable during the course of the method.

As mentioned in connection with Figure 5, for example, an embodiment of a method according to the present invention may include a step 510 in which an overview image of the sample 10 may be acquired, e.g. using transmitted light microscopy. This is also illustrated in Figure 6A, where an area 13 of the sample 10, which may be user-defined or automatically detected, is covered by a plurality of images 622a, 622b which are only partially indicated with reference numerals. These images 622a, 622b may, as indicated, be acquired with a certain overlap and particularly with different focus settings, if necessary, and they may be stitched using methods generally known from the art. An overview image thus obtained may be the basis of an object-finding procedure or an autofocus procedure, as mentioned, particularly in order to be able to manually identify or to automatically identify a region of interest in the sample 10 and/or in order to bring the sample 10 in focus.

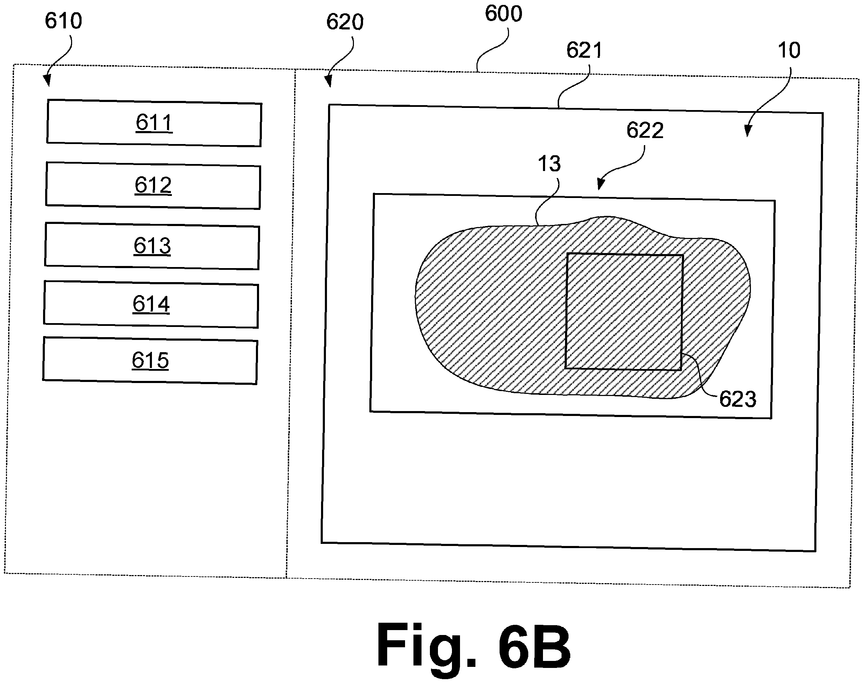

As illustrated in Figure 6B and mentioned before in connection with step 514 of method 500, a first acquisition 514 of fluorescence emissions of at least a subset of the fluorophores in a first sample region using the wide-field fluorescence microscopy mode obtaining first image data may be performed in an embodiment of the present invention. This is illustrated in Figure 6B in the form of a region 621 while the overview previously obtained, which may be present or not, is still indicated 622 here.

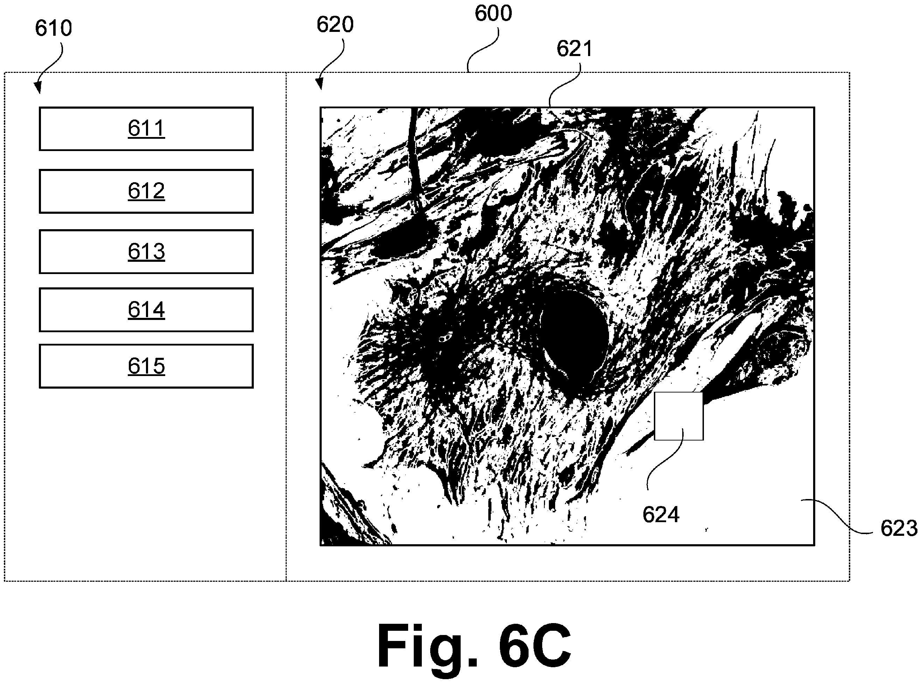

Image data obtained in the first acquisition are illustrated in Figure 6C in an example. The image data are referred to with 623 in Figure 6C. An embodiment of the present invention includes performing a selection, referred to with 516 before, of a second sample region, wherein the second sample region is a partial region of the first sample region and indicated 624 here. A plurality of second sample regions may also be selected.

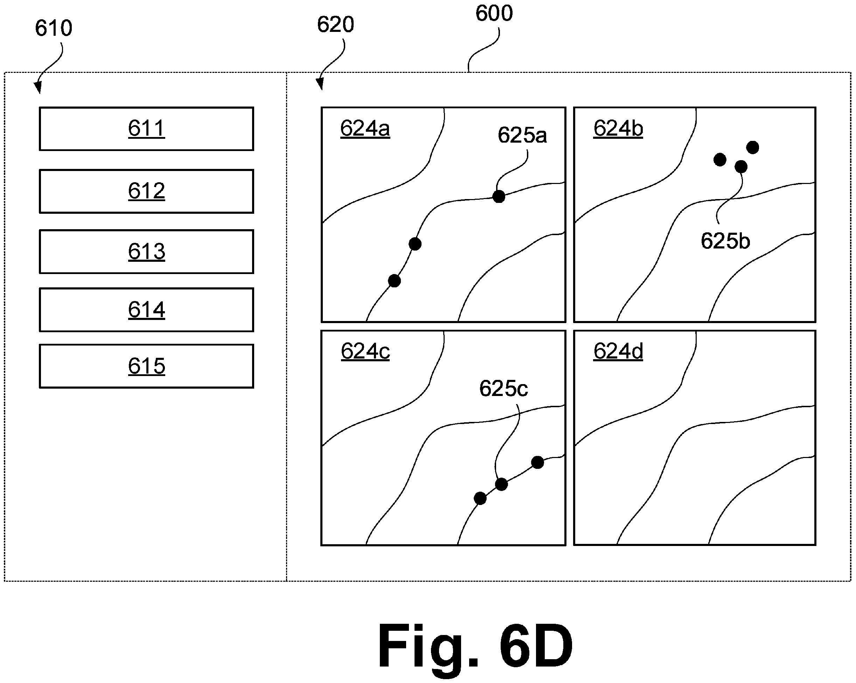

As illustrated in Figure 6D, the second acquisition 522 may result in spectrally-unmixed fluorescence images of at least a subset of the fluorophores in the second sample region 624 to be detected using the confocal fluorescence microscopy mode. Such images are illustrated side-by side and referred to with 624a to 624d. As illustrated, certain features 625a to 625d, such as fluorophore-tagged cellular components, may be visually compared in these images 624a to 624d. Any further steps of image processing may be included.

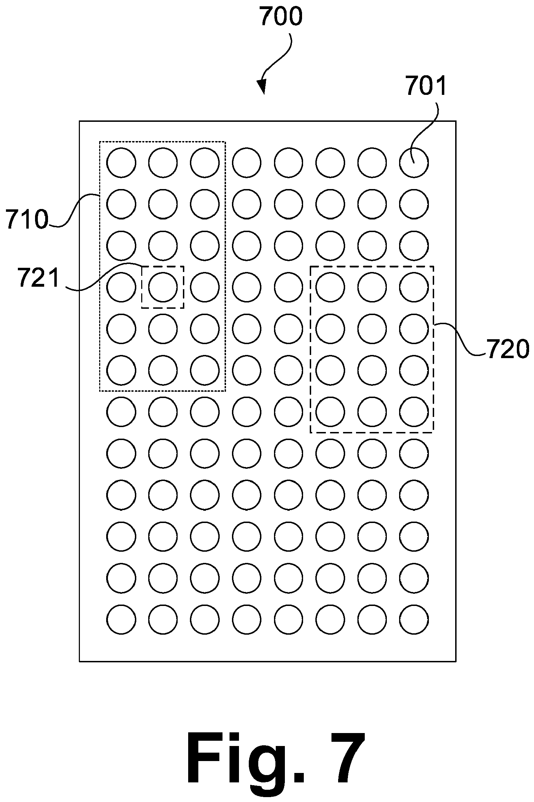

As mentioned before, a method according to an embodiment of the present invention, may include that wherein the sample is provided in an array of samples comprising a first sub-array and a second sub-array, the first acquisition being performed for the first sub-array and the second sub-array and the second acquisition being performed for the first sub-array and not for the second sub-array. An array of samples may particularly be provided in a multi-well plate such as illustrated in Figure 7 and indicated 700. The multi-well plate 700 comprises individual wells 701 and the array may be formed by any number of continuous or discontinuous wells, such as illustrated with 710 and 720 in Figure 7. For avoidance of doubt, an "array" may include any of the wells 701, e.g. the wells referred to with 720 and the single well 721 may be part of an "array" as understood herein.

Figure 8 generally illustrates a beam splitting which may be used to form the detection channels 310 to 340 referred to above, particularly in connection with Figure 3. The approach illustrated here corresponds to that disclosed in EP 3 721 279 B1 but, as mentioned, forming detection channels 310 to 340 may be performed differently.

As shown in Figure 8, fluorescence light including light components or bandwidth regions 31 to 34 emitted in a microscope 200 may be split using dichroic layers D1 to D4 each of which may be configured as a high- or low-pass filter to transmit and reflect certain wavelength regions. Using mirrors M1 to M3, the reflected light components may be made incident onto detectors or sensors S1 to S4 which may be area or photon-counting sensors, as mentioned, to form the detection channels 310 to 330.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a nontransitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may e.g. comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference numerals

- 10: Sample
- 11: Object plane
- 12: Fluorophores
- 13: Sample area
- 31-34: Light components
- 100: Microscope system
- 110: Microscope
- 111: Microscope housing
- 112: Lid
- 113: Sample space
- 115: Sample holder
- 116: Illumination unit
- 117: Detection part
- 118: Wide-field detection unit
- 119: Confocal detection unit
- 120: Computer system
- 121: Display
- 122: Graphical user interface
- 123: Processor(s)
- 124: Storage device(s)
- 125: Keyboard
- 126: Keyboard
- 127: First button
- 128: Second button
- 130: Interface unit
- 200: Fluorescence microscope
- 210: Wide-field detection unit
- 211: Wide-field illumination unit
- 212: Dichroic mirror
- 213: Wide-field image plane
- 214: Wide-field detection arrangement
- 220: Confocal detection unit
- 221: Point light source
- 222: Dichroic mirror
- 223: Confocal image plane
- 224: Confocal detection arrangement
- 225: Pinhole
- 226: X/Y scanner
- 230: Switchable or displaceable mirror
- 230': Mirror position
- 240: Blocking or excitation/emission filter
- 310-340: Detection channels
- 301-304: Fluorophore spectra
- 400: Fluorescence microscope
- 410: Control unit
- 420: Illumination sources
- 421: Illumination path
- 422: Detection path
- 430: Dichroic mirror
- 440: Lens
- 450: Detection channels
- 500: Method
- 502: Start
- 502: Provide access to sample space
- 504: Position sample
- 506: Restrict access to sample space
- 508: Acquire overview image
- 510: Provide sample parameters
- 512: Provide fluorescence parameters
- 514: First acquisition
- 516: Select second region
- 518: Switch fluorescence microscopy modes
- 520: Lens change
- 522: Second acquisition
- 524: Optional further step(s)
- 526: End
- 600: Graphical user interface view
- 610: First panel
- 611-615: User interface widgets
- 620: Right panel
- 621: Viewing region
- 622: Overview
- 622a, 622b: Stitched images
- 623: First sample region
- 624: Second sample region
- 624a-624d: Confocal microscopy images
- 625a-625d: Image features
- 700: Multi-well plate
- 701: Well
- 713: First array
- 720, 721: Second array
- D1-D3: Dichroic layers
- M1-M3: Mirrors
- S1-S4: Sensors

## Claims

1. A method (500) of analysing a microscopic sample (10) containing a plurality of fluorophores (301-304) using a wide-field fluorescence microscopy mode and a confocal fluorescence microscopy mode and comprising the steps of
a) performing a first acquisition (514) of fluorescence emissions of at least a subset of the fluorophores (301-304) in a first sample region (623) using the wide-field fluorescence microscopy mode obtaining first image data,
b) performing a selection (516) of a second sample region (624), the second sample region (624) being a partial region of the first sample region (623), and
c) performing a second acquisition (522) of fluorescence emissions of at least a subset of the fluorophores (301-304) in the second sample region (624) using the confocal fluorescence microscopy mode obtaining second image data,
wherein said first and second acquisition (514, 522) are performed using a detection in a plurality of detection channels capturing different wavelength regions (310-340).

2. The method (500) according to claim 1, wherein the plurality of detection channels in the wide-field fluorescence microscopy mode and the confocal fluorescence microscopy mode comprise at least two and/or up to four detection channels.

3. The method (500) according to claim 1 or 2, wherein the plurality of detection channels in the wide-field fluorescence microscopy mode and the confocal fluorescence microscopy mode comprise different detectors.

4. The method (500) according to any one of the preceding claims, wherein said first acquisition (514) is preceded by a step of obtaining third image data using a transmitted light microscopy technique in a third sample region (622) equal to or larger than the first sample region (623).

5. The method (500) according to claim 4, wherein said first acquisition (514) is preceded by a step of identifying one or more sample areas in the third image data.

6. The method (500) according to any of the preceding claims, wherein said first acquisition (514) is further preceded by a step of providing (506) a sample description dataset indicating one or more sample properties of the sample (10).

7. The method (500) according to claim 6, wherein the one or more sample properties include fluorophore properties of at least a subset of the fluorophores (301-304).

8. The method (500) according to claim 7, wherein the fluorescence emissions acquired in the first and second acquisition (514, 522) are spectrally un-mixed, using the fluorophore properties, to provide the first and second image data.

9. The method (500) according to any one of the preceding claims, wherein said first acquisition (514) is performed at a first magnification and said second acquisition (522) is performed at a second magnification higher than the first magnification.

10. The method (500) according to any of the preceding claims, wherein said second acquisition (522) is performed as an acquisition in different sample planes.

11. The method (500) according to any of the preceding claims, wherein the images obtained in said first and second acquisition (514, 522) are at least one of aligned and simultaneously displayed in an overlaid or in a side-by-side arrangement.

12. The method (500) according to any of the preceding claims, wherein the sample (10) is provided in a sample array (700) comprising a first sub-array (710) and a second sub-array (720, 721), the first acquisition (514) being performed for the first sub-array (710) and the second sub-array (720, 721) and the second acquisition (522) being performed for the first sub-array (710) and not for the second sub-array (720, 721).

13. The method (500) according to any of the preceding claims, wherein a sample (10) is received in a fluorescence microscope (110) and wherein the sample remains in the microscope (110) during all method steps.

14. An arrangement (120, 130) for of analysing a microscopic sample (10) containing a plurality of fluorophores (301-304) using a wide-field fluorescence microscopy technique and a confocal fluorescence microscopy technique and being configured to
a) perform a first acquisition (514) of fluorescence emissions of at least a subset of the fluorophores (301-304) in a first sample region (623) using the wide-field fluorescence microscopy technique obtaining first image data,
b) perform a selection (516) of a second sample region (624), the second sample region (624) being a partial region of the first sample region (623), and
c) perform a second acquisition (522) of fluorescence emissions of at least a subset of the fluorophores (301-304) in the second sample region (624) using the confocal fluorescence microscopy technique obtaining second image data,
wherein the arrangement (120, 130) is configured to perform said first and second acquisition (514, 522) using a detection in a plurality of detection channels capturing different wavelength regions (310-340).

15. An arrangement (120, 130) according to claim 14, wherein the arrangement (120, 130) is configured for performing a method (500) according to any one of claims 1 to 13.

16. A microscope system (100), comprising an arrangement (120, 130) according to claim 14 or 15 and a microscope (110) configured for performing said first and second acquisitions (514, 522).

17. A computer program with program code for performing a method according to any one of claims 1 to 13 when executed on a computer (130).
